# EUROPÄISCHE PATENTSCHRIFT

(11) **EP 1 556 248 B1**
(45) Veröffentlichungstag und Bekanntmachung des Hinweises auf die Patenterteilung: **04.08.2010**
(21) Anmeldenummer: 03809736.6
(22) Anmeldetag: 28.10.2003
(51) Int. Cl.: B60N 3/10

(54) **GETRÄNKEHALTER**
DRINKS HOLDER
PORTE-GOBELET

(30) Priorität: 29.10.2002 DE 20216674 U
(43) Veröffentlichungstag der Anmeldung: 27.07.2005
(73) Patentinhaber: TRW Automotive Electronics & Components GmbH, 78315 Radolfzell (DE)
(72) Erfinder: WAGNER, Jörg, 67661 Kaiserslautern (DE)
(74) Vertreter: Prinz & Partner
(86) Internationale Anmeldenummer: PCT/EP2003/011946
(87) Internationale Veröffentlichungsnummer: WO 2004/039630

(56) Entgegenhaltungen:
- WO-A-01/43941
- US-A- 5 060 899
- US-A- 5 598 999
- US-A1- 2001 023 872
- US-B1- 6 234 438

## Beschreibung

Die Erfindung betrifft einen Getränkehalter, insbesondere für Kraftfahrzeuge, gemäß dem Oberbegriff der Ansprüche 1 und 2.

Ein solcher Getränkehalter muß eine Vielzahl von Anforderungen erfüllen. Zum einen soll er eine Vielzahl von unterschiedlichen Behältnissen zuverlässig aufnehmen und festhalten können. Zum anderen soll er aus einer Betriebsstellung, in der er die Behältnisse aufnehmen kann, in eine möglichst platzsparende Bereitschaftsstellung überführt werden können, und umgekehrt. In der Bereitschaftsstellung soll der Getränkehalter vorzugsweise nicht sichtbar sein, beispielsweise hinter einer Abdeckung versteckt, oder in anderer Weise so in eine ihn umgebende Verkleidung integriert, daß ein harmonischer optischer Gesamteindruck entsteht. Schließlich ist es wünschenswert, daß auch zwei Behältnisse aufgenommen werden können.

Die bisher bekannten Getränkehalter haben diese Anforderungen nicht immer überzeugend erfüllt.

Aus der US 6,234,438 ist ein Getränkehalter der eingangs genannten Art bekannt. Hier wird ein zweiter Halter mit Boden verwendet, der schwenkbar in einem ersten Halter mit Boden angeordnet ist. Weitere Beispiele für Getränkehalter finden sich in der US 2001/0023872 A1, der US 5,598,999 und der US 5,060,899.

Die Aufgabe der Erfindung besteht darin, einen Getränkehalter zu schaffen, der die oben genannten Anforderungen erfüllt.

Zu diesem Zweck ist erfindungsgemäß gemäß einem ersten Aspekt der Erfindung bei einem Getränkehalter der eingangs genannten Art vorgesehen, dass der Träger durch einen ersten Druck in eine erste Position ausfährt und durch einen zweiten Druck noch weiter aus der Unterlage herausfährt. Gemäß einem zweiten Aspekt der Erfindung ist zu diesem Zweck bei einem Getränkehalter der eingangs genannten Art vorgesehen, dass der Träger durch einen ersten Druck in die erste Stellung ausfährt und durch einen zweiten Druck auf den Träger die beiden Halteringe und die beiden Bodenteile voneinander weg nach außen verdreht werden. Dieser Getränkehalter zeichnet sich durch zwei unterschiedliche Stellungen aus, nämlich eine erste Stellung, in der nur ein erstes Behältnis aufgenommen werden kann und in welcher der Getränkehalter vergleichsweise platzsparend ist, und eine zweite Stellung, in der zwei Behältnisse aufgenommen werden können.

Die Erfindung wird nachfolgend anhand zweier bevorzugter Ausführungsformen beschrieben, die in den beigefügten Zeichnungen dargestellt sind. In diesen zeigen:
- Figur 1 in einer perspektivischen Ansicht eine Mittelkonsole mit einem Getränkehalter gemäß einer ersten Ausführungsform der Erfindung;
- Figur 2 den Getränkehalter von Figur 1 im versenkten Zustand;
- Figur 3 den Getränkehalter von Figur 1 in einem Zwischenzustand;
- Figur 4 den Getränkehalter von Figur 1 in einer vergrößerten Ansicht;
- Figur 5 einen Getränkehalter gemäß einer zweiten Ausführungsform der Erfindung im versenkten Zustand;
- Figur 6 den Getränkehalter von Figur 5 in einer ersten Stellung; und
- Figur 7 den Getränkehalter von Figur 5 in einer zweiten Stellung.

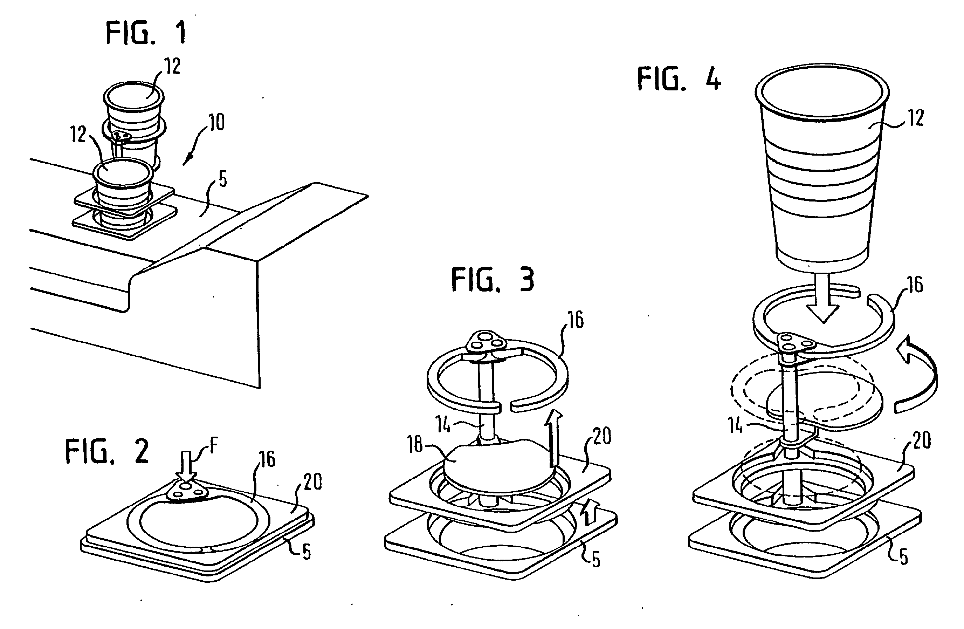

In Figur 1 ist eine Mittelkonsole 5 angedeutet, die als Unterlage für einen Getränkehalter 10 dient. Dieser kann zwei Behältnisse 12 aufnehmen, beispielsweise zwei Becher.

Der Getränkehalter weist einen Träger 14 auf, an dem ein erster Haltering 16 angebracht ist. Am Träger 14 ist ferner ein erstes Bodenteil 18 angebracht. Durch einen Druck auf den Träger 14 in der Richtung des Pfeils F von Figur 2 wird ein Druck-Druck-Verriegelungsmechanismus freigegeben, woraufhin der Träger 14 aus der Unterlage heraus nach oben unter der Wirkung einer Feder ausfährt, so daß der Haltering 16 sich oberhalb der Unterlage 5 befindet und der Boden 18 sich etwa auf Höhe der Oberfläche der Unterlage 5 befindet. In diesem Zustand kann ein erstes Behältnis 12 in den Haltering 16 eingesetzt werden. Durch einen zweiten Druck auf den Träger 14 fährt dieser noch weiter aus der Unterlage 5 nach oben, so daß ein zweiter Haltering 20 (siehe Figur 3) von der Unterlage 5 abgehoben wird. Der Haltering 16 kann nun zusammen mit dem Bodenteil 18 relativ zum zweiten Haltering 20 in eine zweite Stellung (siehe Figur 4) verdreht werden, in der sich der erste Haltering 16 und das Bodenteil 20 außerhalb des zweiten Halterings 20 befinden. Es ist nun möglich, in den zweiten Haltering ein zweites Behältnis einzusetzen, wobei eine in der Unterlage 5 vorhandene Öffnung als Aufnahmeraum und Boden dient.

Wenn der erste Haltering 16 und das Bodenteil 18 wieder in die erste Stellung verdreht werden, in der sie konzentrisch mit dem zweiten Haltering 20 sind, können sie durch Druck auf den Träger 14 in die Unterlage 5 eingeschoben und dort verriegelt werden, so daß der ganze Getränkehalter wieder bündig mit der Unterlage 5 abschließt.

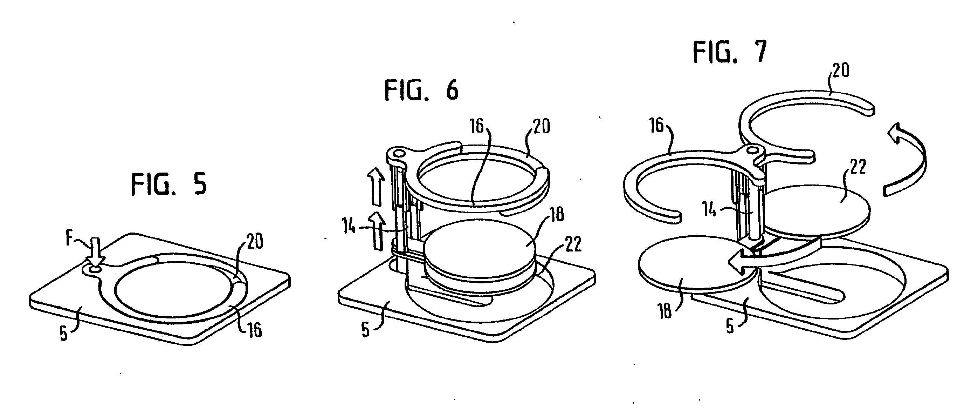

In den Figuren 5 bis 7 ist ein Getränkehalter gemäß einer zweiten Ausführungsform gezeigt. Auch dieser weist einen Träger 14 auf, der in einer Unterlage 5 versenkbar ist. Am Träger 5 sind ein erster Haltering 16 und ein zweiter Haltering 20 angebracht, sowie ein erstes Bodenteil 18 und ein zweites Bodenteil 22.

Durch einen ersten Druck auf das obere Ende des Trägers 14 bzw. den ersten Haltering 16 fährt der Getränkehalter in die in Figur 6 gezeigte erste Stellung aus, in welcher der erste Haltering 16, der zweite Haltering 20, das erste Bodenteil 18 und das zweite Bodenteil 22 konzentrisch miteinander sind. In dieser ersten Stellung kann ein einziges Behältnis in die Halteringe 16, 20 eingesetzt werden, so daß es auf dem Boden 18 aufliegt.

Durch einen zweiten Druck auf den Träger 14 wird ein Riegelmechanismus ausgelöst, so daß die beiden Halteringe 16, 20 sowie die beiden Bodenteile 18, 22 voneinander weg nach außen in die in Figur 7 gezeigte zweite Stellung verdreht werden. In diesem Zustand liegen sie auf der einen und der anderen Seite des Trägers 14, so daß ein erstes und ein zweites Behältnis aufgenommen werden kann.

## Patentansprüche

1. Getränkehalter, insbesondere für ein Kraftfahrzeug, mit einem Träger (14), der in einer Unterlage (5) versenkbar ist, einem ersten Haltering (16), der an dem Träger (14) angebracht ist, einem Bodenteil (18), das ebenfalls an dem Träger (14) angebracht ist, und einem zweiten Haltering (20), wobei der erste Haltering (16) selektiv in einer ersten Stellung verriegelbar ist, in der er mit dem zweiten Haltering (20) konzentrisch ist, und eine zweite Stellung einnehmen kann, in der er gegenüber dem zweiten Haltering (20) verdreht werden kann, wobei in der ersten Stellung nur ein erstes Behältnis und in der zweiten Stellung zwei Behältnisse aufgenommen werden können, **dadurch gekennzeichnet, dass** der Träger (14) durch einen ersten Druck in eine erste Position ausfährt und durch einen zweiten Druck noch weiter aus der Unterlage (5) herausfährt.

2. Getränkehalter, insbesondere für ein Kraftfahrzeug, mit einem Träger (14), der in einer Unterlage (5) versenkbar ist, einem ersten Haltering (16), der an dem Träger (14) angebracht ist, einem Bodenteil (18), das ebenfalls an dem Träger (14) angebracht ist, einem zweiten Haltering (20), wobei der erste Haltering (16) selektiv in einer ersten Stellung verriegelbar ist, in der er mit dem zweiten Haltering (20) konzentrisch ist, und eine zweite Stellung einnehmen kann, in der er gegenüber dem zweiten Haltering (20) verdreht werden kann, und mit einem zweiten Bodenteil (22), das in der verriegelten Stellung des ersten Halterings (16) konzentrisch mit dem ersten Bodenteil (18) angeordnet ist, wobei in der ersten Stellung nur ein erstes Behältnis und in der zweiten Stellung zwei Behältnisse aufgenommen werden können, **dadurch gekennzeichnet, dass** der Träger (14) durch einen ersten Druck in die erste Stellung ausfährt und durch einen zweiten Druck auf den Träger (14) die beiden Halteringe und die beiden Bodenteile voneinander weg nach außen verdreht werden.

## Claims

1. A cup holder, especially for a motor vehicle, comprising a support (14) that can be lowered into a base (5), a first holding ring (16) that is attached to the support (14), a bottom part (18) that is likewise attached to the support (14), and a second holding ring (20), the first holding ring (16) being adapted to be selectively locked in a first position in which it is concentric with the second holding ring (20), and being adapted to assume a second position in which it can be rotated with respect to the second holding ring (20), wherein in the first position only a first container and in the second position two containers can be accommodated, **characterized in that** by pressing a first time, the support (14) extends to a first position, and by pressing a second time, it extends even further from the base (5).

2. A cup holder, especially for a motor vehicle, comprising a support (14) that can be lowered into a base (5), a first holding ring (16) that is attached to the support (14), a bottom part (18) that is likewise attached to the support (14), a second holding ring (20), the first holding ring (16) being adapted to be selectively locked in a first position in which it is concentric with the second holding ring (20), and being adapted to assume a second position in which it can be rotated with respect to the second holding ring (20), and a second bottom part (22) which, in the locked position of the first holding ring (16), is arranged concentrically with the first bottom part (18), wherein in the first position only a first container and in the second position two containers can be accommodated, **characterized in that** by pressing a first time, the support (14) extends to the first position, and by pressing on the support (14) a second time, the two holding rings and the two bottom parts are rotated outwards away from each other.

## Revendications

1. Porte-boissons, en particulier pour un véhicule automobile, comportant un support (14) escamotable dans une base (5), un premier anneau de maintien (16) monté sur le support (14), un tronçon de fond (18) également monté sur le support (14), et un deuxième anneau de maintien (20), le premier anneau de maintien (16) pouvant être sélectivement verrouillé dans une première position dans laquelle il est concentrique par rapport au deuxième anneau de maintien (20), et étant apte à prendre une deuxième position dans laquelle il peut être tourné par rapport au deuxième anneau de maintien (20), un seul récipient pouvant être reçu dans la première position, et deux récipients pouvant être reçus dans la deuxième position, **caractérisé en ce que** le support (14) sort dans une première position par une première pression et sort encore plus de la base (5) par une deuxième pression.

2. Porte-boissons, en particulier pour un véhicule automobile, comportant un support (14) escamotable dans une base (5), un premier anneau de maintien (16) monté sur le support (14), un tronçon de fond (18) également monté sur le support (14), un deuxième anneau de maintien (20), le premier anneau de maintien (16) pouvant être sélectivement verrouillé dans une première position dans laquelle il est concentrique par rapport au deuxième anneau de maintien (20), et étant apte à prendre une deuxième position dans laquelle il peut être tourné par rapport au deuxième anneau de maintien (20), ainsi qu'un deuxième tronçon de fond (22) qui est agencé de façon concentrique par rapport au premier tronçon de fond (18) dans la position verrouillée du premier anneau de maintien (16), un seul récipient pouvant être reçu dans la première position, et deux récipients pouvant être reçus dans la deuxième position, **caractérisé en ce que** le support (14) sort dans la première position par une première pression et **en ce que** les deux anneaux de maintien et les deux tronçons de fond sont tournés vers l'extérieur en éloignement les uns des autres par une deuxième pression sur le support (14).
